# EUROPÄISCHE PATENTSCHRIFT

(11) **EP 0 688 408 B1**
(45) Veröffentlichungstag und Bekanntmachung des Hinweises auf die Patenterteilung: **28.05.1997**
(21) Anmeldenummer: 94911903.6
(22) Anmeldetag: 16.03.1994
(51) Int. Cl.: F16H 37/08

(54) **STUFENLOS VARIABLES GETRIEBE MIT GROSSER ÜBERSETZUNGSSPREIZUNG**
CONTINUOUSLY VARIABLE TRANSMISSION WITH WIDE TRANSMISSION RATIO RANGE
TRANSMISSION A VARIATION CONTINUE A LARGE PLAGE DE DEMULTIPLICATION

(30) Priorität: 19.03.1993 DE 4308761
(43) Veröffentlichungstag der Anmeldung: 27.12.1995
(73) Patentinhaber: ZF FRIEDRICHSHAFEN Aktiengesellschaft, 88038 Friedrichshafen (DE)
(72) Erfinder: KUHN, Walter, D-88045 Friedrichshafen (DE); HERTER, Hartmut, D-88074 Meckenbeuren (DE)
(86) Internationale Anmeldenummer: EP9400832
(87) Internationale Veröffentlichungsnummer: WO9421941

(56) Entgegenhaltungen:
- EP-A- 0 210 053
- EP-A- 0 347 186
- DE-A- 3 323 466
- US-A- 4 885 955

## Beschreibung

Die Erfindung bezieht sich auf ein stufenlos variables Getriebe mit den im Oberbegriff von Anspruch 1 aufgeführten Merkmalen, die aus der DE-A-3323466 bekannt sind.

Ein stufenlos variables Getriebe der vorstehend erläuterten Bauart ist auch unter der Bezeichnung CVT in i²⁻Anordnung bekanntgeworden (Multi-pass Continuously Variable Transmission). Mit dieser läßt sich die Übersetzungsspreizung (d. h, der Verstellbereich als Verhältnis der maximalen zur minimalen Übersetzung) eines mechanischen Variators im Quadrat erhöhen.

Aus der EP-A-0 210 053 ist ein weiteres CVT in i²⁻Anordnung bekanntgeworden. Die Besonderheit dieser Anordnung ist darin zu sehen, daß der Variator asymmetrisch ausgelegt ist, so daß das maximale Untersetzungsverhältnis gleich oder kleiner als das maximale Übersetzungsverhältnis sein kann.

Allgemein sind stufenlose Getriebe gegenüber Stufenschaltgetrieben mit dem Nachteil eines schlechteren Übertragungswirkungsgrades behaftet.

Der vorliegenden Erfindung liegt die Aufgabe zugrunde, ein stufenloses Getriebe der eingangs genannten Art zu schaffen, das sich durch eine große Gesamtgetriebespreizung bei einem guten Gesamtgetriebewirkungsgrad und einer hohen Belastbarkeit auszeichnet.

Die der Erfindung zugrunde liegende Aufgabe wird durch die im Anspruch 1 aufgeführten Merkmale gelöst.

Durch die vorgeschlagene Leistungsverzweigung wird die Getriebeeingangsleistung auf mehrere Getriebezweige aufgeteilt. Die Leistung fließt über mindestens einen Getriebezweig mit konstanter Übersetzung und über einen stufenlosen Getriebezweig, dessen Übersetzung variabel ist. Besonders vorteilhaft ist, daß der Variator nach dem i²⁻Konzept arbeitet. Durch die Leistungsverzweigung wird der Anteil der Leistung, der über den stufenlosen Getriebezweig übertragen wird, gesenkt. Damit läßt sich eine Verbesserung des Übertragungswirkungsgrades des gesamten Getriebes erzielen. Dies ist darin begründet, daß der Wirkungsgsrad des Variators nur anteilig in den Wirkungsgrad des Gesamtgetriebes eingeht. Hierbei ist zu beachten, daß die Leistungsverzweigung nur dann zu einer deutlichen Reduzierung des Leistungsanteiles des Variators und damit zu der angestrebten Verbesserung des Gesamtgetriebewirkungsgrades führt, wenn eine große Übersetzungsspreizung zur Verfügung steht, d. h. der stufenlose Getriebezweig in i²⁻Anordnung ausgeführt wird. Der große Verstellbereich macht einen zusätzlichen Drehmomentwandler überflüssig; dies ist ein zusätzlicher Vorteil, der sich insbesondere in einem günstigen Kraftstoffverbrauch bei guten Fahrleistungen, insbesondere guten Beschleunigungswerten, bemerkbar macht. Zudem wird das Geräuschverhalten erheblich verbessert. Durch das niedrige VariatorAntriebsmoment ist die Verwendung eines relativ klein ausgelegten Variators möglich, woraus neben einem günstigen Wirkungsgrad ein geringer Bauraum bei niedrigen Kosten resultiert. Vorzugsweise läßt sich das erfindungsgemäß vorgeschlagene Getriebe bei Pkws und leichten Nutzfahrzeugen einsetzen.

Das stufenlos variable Getriebe, bei dem die Realisierung einer Leistungsverzweigung mit einfachen Mitteln möglich ist, zeichnet sich dadurch aus, daß die Antriebswelle ein Verteilerdifferential treibt, das zwei Ausgangswellen aufweist, von denen eine mit der Abtriebswelle verbunden ist. Auf diese Weise wird zumindest ein Getriebezweig mit einer konstanten Übersetzung bereitgestellt. Es ist selbstverständlich möglich, mehrere Ausgangswellen vorzusehen, so daß die Verwirklichung von mehreren konstanten Getriebezweigen möglich ist.

Das Verteilerdifferential ist aus einem Planetengetriebe gebildet. Durch ein einfaches Planetengetriebe läßt sich eine Leistungsverzweigung erzielen, die sich durch einen geringen Bauraum bei geringen Herstellkosten auszeichnet. In diesem Fall ist der Steg des Planetengetriebes mit der Antriebswelle verbunden, während das große Zentralrad mit einer Hohlwelle (eine der Ausgangswellen) und dessen kleines Zentralrad mit der Abtriebswelle in Antriebsverbindung steht. Hiermit ist der Leistungsanteil des stufenlosen Getriebes deutlich abgesenkt. Damit stellt sich ein hoher Geamtgetriebewirkungsgrad ein. Der Kraftstoffverbrauch wird durch den verbesserten Wirkungsgrad günstig beeinflußt. Das Geräuschverhalten ist gut.

Die Ausgangswellen des Verteilerdifferentials sind konzentrisch zueinander liegend angeordnet. Die innere Ausgangswelle ist als Vollwelle ausgebildet, während die äußere Ausgangswelle als Hohlwelle ausgestaltet ist. Auf dieser Hohlwelle sind Zahnräder gelagert, die mit Zahnrädern jeweils einer Zwischenwelle im Eingriff stehen. Über Schaltelemente ist eine Antriebsverbindung von der Hohlwelle zu einer der Zwischenwellen schaltbar, um jeweils die eine oder andere Seite des Variators anzutreiben.

Wenn die auf der Hohlwelle gelagerten Zahnräder als Losräder ausgebildet sind und die Zahnräder der Zwischenwellen als Festräder ausgelegt sind, lassen sich die erforderlichen Schaltelemente zentral anordnen. Auch diese Maßnahme senkt den erforderlichen Bauraum. Hierbei ist es ferner vorteilhaft und auch möglich, die Schaltelemente baulich zu einer Doppelkupplung zusammenzufassen. Die zur Betätigung der Doppelkupplung erforderlichen Schaltelemente sind durch ihre zentrale Lage einfach innerhalb des Getriebes unterzubringen. Das gleiche gilt auch für die Ölzuführung, wenn die Doppelkupplung als nasse Lamellenkupplung ausgeführt ist.

Um Kosten zu senken, ist die Mehrfachverwendung gleicher Bauteile anzustreben. Dies ist insbesondere dann möglich, wenn die abtriebsseitige Gestaltung des Getriebes die Verwendung gleicher Bauteile gestattet. Um auch auf der Abtriebsseite des Getriebes zu einer kompakten Bauweise zu kommen, sind auf der Abtriebswelle Zahnräder gelagert, die mit Zahnrädern jeweils einer Zwischenwelle im Eingriff stehen. Über Schaltelemente, die baugleich zur Antriebsseite ausgebildet sein können, ist wahlweise eine Antriebsverbindung von einer der Zwischenwellen über den Variator zur jeweils anderen Zwischenwelle zu schalten.

Das Ziel einer kompakten, übersichtlichen und leicht zugänglichen Bauweise wird auch durch die Maßnahme erreicht, daß die auf der Abtriebswelle gelagerten Zahnräder als Losräder und die auf den Zwischenwellen vorhandenen Zahnräder als Festräder ausgebildet sind.

In vorteilhafter Weise ist jedem Losrad der Abtriebswelle wiederum ein Schaltelement zugeordnet. Die Schaltelemente können auch hier baulich zu einer Doppelkupplung zusammengefaßt sein.

Je nach den baulichen Verhältnissen kann das zur Leistungsverzweigung vorgeschlagene Verteilerdifferential entweder getriebeeingangsseitig oder getriebeausgangsseitig angeordnet sein. Der Fachmann wird aus den sich anbietenden Möglichkeiten unter Berücksichtigung der Einbauverhältnisse die jeweils günstige auswählen. Der Variator sollte eine Übersetzungsspreizung von zumindest dem Faktor 4 aufweisen. Es ist gleichermaßen möglich, ein Umschlingungsgetriebe oder ein Reibradgetriebe zu verwenden.

Weitere, für die Erfindung wesentliche Merkmale sowie die daraus resultierenden Vorteile sind der nachfolgenden Beschreibung eines Ausführungsbeispiels der Erfindung zu entnehmen.

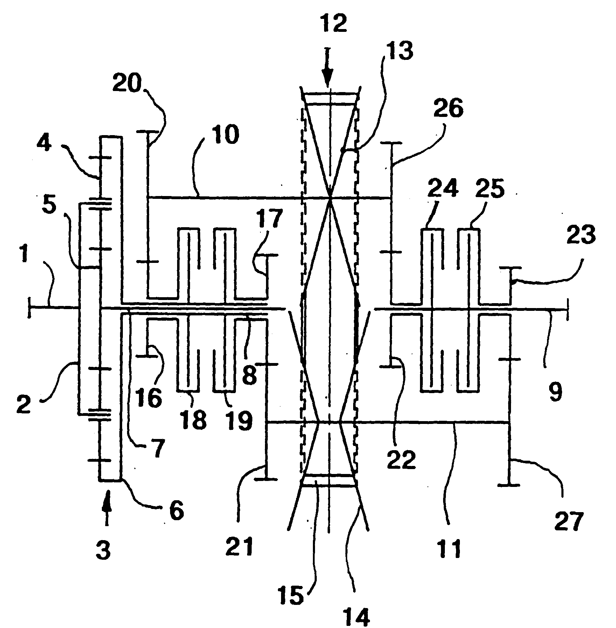

Die einzige Figur zeigt in stark vereinfachter, schematischer Darstellung ein Ausführungsbeispiel für ein leistungsverzweigtes, stufenloses Getriebe in i²⁻Anordnung.

Eine Antriebswelle 1 treibt einen Steg 2 eines einfachen Planetengetriebes 3, welches die Funktion eines Verteilerdifferentials erfüllt. Anstelle eines Verteilerdifferentials könnte auch ein Sammeldifferential eingesetzt werden, das dann die Funktion eines Ausgangsdifferentials hat. Am Steg 2 sind mehrere Planeten 4 drehbar gelagert, die mit einem kleinen Zentralrad 5 und einem großen Zentralrad 6 in kämmender Antriebsverbindung stehen.

Das kleine Zentralrad ist drehfest auf einer ersten Ausgangswelle 7 des Planetengetriebes 3 angeordnet. Das große Zentralrad treibt eine weitere Ausgangswelle 8, die als Hohlwelle ausgebildet ist, und konzentrisch zur ersten Ausgangswelle 7 gelagert ist.

Die Ausgangswelle 7 ist, was in der Zeichnung aus Gründen der Übersichtlichkeit weggelassen ist, direkt mit einer Abtriebswelle 9 des Getriebes verbunden. Der vom kleinen Zentralrad 5 angetriebene Getriebezweig (erste Ausgangswelle 7 und Abtriebswelle 9) arbeitet mit einer konstanten Übersetzung.

Parallel zur ersten Ausgangswelle 7, der Abtriebswelle 9 und der Ausgangswelle 8 verläuft eine erste Zwischenwelle 10 und eine zweite Zwischenwelle 11. Die Zwischenwellen 10 und 11 sind über einen stufenlos verstellbaren Variator 12 miteinander verbunden. Hierzu sind in bekannter Weise paarweise angeordnete Kegelscheiben 13 und 14 auf den Zwischenwellen 10 und 11 angeordnet. Zwischen den Kegelscheiben läuft ein Zugorgan, z. B. ein Schubgliederband 15.

Auf der als Hohlwelle ausgestalteten Ausgangswelle 8 des Planetengetriebes 3 sind zwei Zahnräder 16 und 17 angeordnet, die als Losräder ausgebildet sind. Jedem der Zahnräder 16 und 17 ist ein Schaltelement 18 und 19 zugeordnet, mit dem im geschalteten Zustand entweder das Zahnrad 16 oder das Zahnrad 17 drehfest mit der Ausgangswelle 8 verbindbar ist. Das Zahnrad 16 steht mit einem Zahnrad 20 auf der Zwischenwelle in ständig kämmender Verbindung. Das Zahnrad 20 ist als Festrad ausgebildet. Analog hierzu steht das Zahnrad 17 mit einem Zahnrad 21 der Zwischenwelle 11 in ständigem Eingriff. Das Zahnrad 21 ist ebenfalls als Festrad ausgestaltet.

Auf der Abtriebswelle 9 sind weitere Zahnräder 22 und 23, die ebenfalls als Losräder ausgebildet sind, drehbar gelagert. Es sind weitere Schaltelemente 24 und 25 vorhanden, mit denen entweder das Zahnrad 22 oder das Zahnrad 23 mit der Abtriebswelle 9 drehfest verbunden werden können.

Das Zahnrad 22 kämmt mit einem Zahnrad 26 der Zwischenwelle 11. Das Zahnrad 23 steht seinerseits in kämmender Antriebsverbindung mit einem Zahnrad 27, das drehfest mit der Zwischenwelle 11 verbunden ist.

Die Funktion bzw. der Leistungsfluß beim Betrieb des vorstehend erläuterten, stufenlos variablen Getriebes ist wie folgt:

Die Getriebeeingangsleistung fließt über die Antriebswelle 1 und den Steg 2 in das Planetengetriebe 3. Dort wird die Getriebeeingangsleistung aufgeteilt. Der Leistungsanteil des konstanten Getriebezweiges fließt über das kleine Zentralrad 5 direkt auf die Ausgangswelle 7 und die mit ihr verbundene Abtriebswelle 9. Das Getriebe verfügt über zwei Übersetzungsbereiche in Fahrtrichtung Vorwärts. Im ersten Übersetzungsbereich sind die Schaltelemente 18 und 25 geschlossen. Der Leistungsanteil im stufenlosen Getriebezweig fließt über das große Zentralrad 6 auf die Ausgangswelle 8 und von dort über die Zahnradpaarung 16-20 auf die Zwischenwelle 10. Ferner fließt dieser Leistungsanteil über den Variator 12 auf die Zwischenwelle 11 und von dort über die Zahnradpaarung 27-23 auf die Abtriebswelle 9 zurück. Die Schaltelemente 19 und 24 sind geöffnet, so daß über die Zahnradpaarungen 26-22 und 17-21 keine Leistung übertragen wird.

Im zweiten Übersetzungsbereich in Fahrtrichtung Vorwärts sind die Schaltelemente 19 und 24 geschlossen, während die Schaltelemente 18 und 25 geöffnet sind. Der Leistungsanteil im stufenlosen Getriebezweig fließt über die Zahnradpaarung 17-21 auf die Zwischenwelle 11, von dort über den Variator 12 auf die Zwischenwelle 10 und schließlich über die Zahnradpaarung 26-22 zurück auf die Abtriebswelle 9. In diesem Fall wird über die Zahnradpaarungen 16-20 und 27-23 keine Leistung übertragen.

Wenn das erläuterte Getriebe eine Übersetzungsspreizung von 8 aufweisen soll, ist von folgenden Verhältnissen auszugehen:
Für eine deutliche Reduzierung des Leistungsanteils im stufenlosen Getriebezweig, der bei maximal 50 % der Getriebeeingangsleistung liegt, ist eine hohe Übersetzungsspreizung innerhalb dieses stufenlosen Getriebezweiges erforderlich. Dies deswegen, weil eine deutliche Verbesserung des Gesamtgetriebewirkungsgrades erreicht werden soll. Für diese Übersetzungsspreizung im stufenlosen Getriebezweig ist ein Faktor von > 15 erforderlich. Da mit mechanischen Variatoren Übersetzungsspreizungen von 5,5 bis 6,0 möglich sind, kann die erforderliche Übersetzungsspreizung von 15 nur dann erreicht werden, wenn der stufenlose Getriebezweig in 12-Anordnung ausgeführt wird. Damit werden für den beispielhaft angeführten Anwendungsfall eines Pkw-Getriebes Variatoren mit einer Übersetzungsspreizung von ungefähr 4 einsetzbar. Ergänzend sei angemerkt, daß der Leistungsanteil des Variators bei maximaler Gesamtübersetzung des Getriebes (Anfahren) auf ungefähr 90 % und bei kleinster Gesamtübersetzung des Getriebes (Overdrive) auf ungefähr 30 % der Getriebeeingangsleistung abgesenkt werden kann. Durch die beträchtliche Reduzierung des durch den Variator übertragenen Leistungsanteils ist eine deutliche Verbesserung des Wirkungsgrades des Gesamtgetriebes möglich. Die Verwendung eines mechanischen Variators in i²-Anordnung ermöglicht eine große Übersetzungsspreizung im stufenlosen Getriebezweig. Damit wird ein zusätzlicher Drehmomentwandler überflüssig. Der Kraftstoffverbrauch wird günstig beeinflußt. Die Fahrleistungen sind gut, was sich insbesondere in einem guten Beschleunigungsverhalten ausdrückt. Durch die i²-Anordnung ist die Verwendung eines relativ kleinen Variators möglich. Dies bedeutet einen geringen Bauraum, akzeptable Herstellkosten und einen guten Wirkungsgrad. Da die Bereichsumschaltung bei Synchrondrehzahl erfolgt, zeichnet sich das Getriebe durch eine gute Schaltqualität und eine geringe Schaltarbeit aus. Da ein ohnehin vorhandenes Schaltelement gleichzeitig als Anfahrelement genutzt wird, wirkt sich dieser Umstand auch günstig auf die Herstellkosten, den erforderlichen Bauraum und das Gewicht des Getriebes aus.

Anstelle einer einfachen Leistungsverzweigung kann auch eine mehrfache Leistungsverzweigung vorgesehen sein. Die einfache Leistungsverzweigung läßt sich mit einem relativ geringen Bauaufwand mit einem Verteilerdifferential (getriebeeingangsseitig, Eingangsdifferential) oder einem Sammeldifferential (getriebeausgangsseitig, Ausgangsdifferential) realisieren. Die Leistungsaufteilung bei der einfachen Leistungsverzweigung auf den konstanten und stufenlosen Getriebe zweig hängt allein von der Übersetzungsspreizung des gesamten Getriebes und von der Übersetzungsspreizung des stufenlosen Getriebezweiges ab. Sie ist also unabhängig von der Bauweise des Planetengetriebes, d. h. unabhängig von der Art der Räderkette und der Standgetriebeübersetzung.

Schließlich sei noch vermerkt, daß aus Gründen der Übersichtlichkeit auf die Darstellung eines Rückwärtsfahrbereiches verzichtet wurde.

### Bezugszeichen

- 1: Antriebswelle
- 2: Steg
- 3: Planetengetriebe
- 4: Planeten
- 5: kleines Zentralrad
- 6: großes Zentralrad
- 7: Ausgangswelle
- 8: Ausgangswelle
- 9: Abtriebswelle
- 10: Zwischenwelle
- 11: Zwischenwelle
- 12: Variator
- 13: Keaelscheiben
- 14: Kegelscheiben
- 15: Schubgliederband
- 16: Zahnrad
- 17: Zahnrad
- 18: Schaltelement
- 19: Schaltelement
- 20: Zahnrad
- 21: Zahnrad
- 22: Zahnrad
- 23: Zahnrad
- 24: Schaltelement
- 25: Schaltelement
- 26: Zahnrad
- 27: Zahnrad

## Patentansprüche

1. Stufenlos variables Getriebe
- mit einer Antriebs- und einer Abtriebswelle (1, 9);
- mit einer ersten und einer zweiten Zwischenwelle (10, 11), die jeweils ein erstes (20, 21) und ein zweites Zahnrad (26, 27) tragen;
- mit ersten Schaltelementen (18, 19) zur Herstellung einer Triebverbindung von der Antriebswelle zu einem der ersten Zahnräder (20 oder 21);
- mit zweiten Schaltelementen (24, 25) zur Herstellung einer Triebverbindung von einem der zweiten Zahnräder (26 oder 27) zu der Abtriebswelle;
- mit einem Variator (12), der die beiden Zwischenwellen so miteinander verbindet, daß die Getriebeeingangsleistung über einen Getriebezweig (5, 7, 9) mit konstanter Übersetzung und einen Getriebezweig mit stufenlos variabler Übersetzung auf die Abtriebswelle (9) geleitet wird;
- mit einem Planetengetriebe, dessen Steg (2) mit der Antriebswelle (1) und dessen kleines Zentralrad (5) mit der Abtriebswelle verbunden ist und dessen großes Zentralrad (6) in einem ersten Übersetzungsbereich über das eine erste Schaltelement (18) die Triebverbindung mit dem ersten Zahnrad (20) auf der ersten Zwischenwelle (10) und in einem zweiten Übersetzungsbereich über das andere erste Schaltelement (19) die Triebverbindung mit dem ersten Zahnrad (21) auf der zweiten Zwischenwelle (11) herstellt;
- wobei im ersten Übersetzungsbereich das eine zweite Schaltelement (25) die Triebverbindung von dem zweiten Zahnrad (27) der zweiten Zwischenwelle (11) zu der Abtriebswelle und
- wobei im zweiten Übersetzungsbereich das andere zweite Schaltelement (24) die Triebverbindung von dem zweiten Zahnrad (26) der ersten Zwischenwelle (10) zu der Abtriebswelle herstellt,
dadurch **gekennzeichnet,** daß
- das große Zentralrad (6) mit einer Hohlwelle (8) drehfest verbunden ist, auf der zwei Zahnräder (16, 17) gelagert sind, die mit dem jeweiligen ersten Zahnrad (20, 21) kämmen und
- auf der Abtriebswelle (9) zwei Zahnräder (22, 23) gelagert sind, die mit dem jeweiligen zweiten Zahnrad (26, 27) kämmen.

2. Getriebe nach Anspruch 1, dadurch **gekennzeichnet,** daß die auf der Hohlwelle (8) gelagerten Zahnräder (16, 17) Losräder sind und die Zahnräder (20, 21) der Zwischenwellen mit diesen drehfest verbunden sind.

3. Getriebe nach Anspruch 5, dadurch **gekennzeichnet,** daß jedem Losrad (16, 17) der Hohlwelle (8) ein Schaltelement (18, 19) zugeordnet ist.

4. Getriebe nach Anspruch 6, dadurch **gekennzeichnet,** daß die Schaltelemente (18, 19) baulich zu einer Doppelkupplung zusammengefaßt sind.

5. Getriebe nach Anspruch 1, dadurch **gekennzeichnet,** daß die auf der Abtriebswelle (9) gelagerten Zahnräder (22, 23) Losräder sind und die Zahnräder (26, 27) der Zwischenwellen (10, 11) drehfest mit diesen verbunden sind.

6. Getriebe nach Anspruch 1, dadurch **gekennzeichnet,** daß jedem Losrad (26, 27) der Abtriebswelle ein Schaltelement (24, 25) zugeordnet ist.

7. Getriebe nach Anspruch 1, dadurch **gekennzeichnet,** daß die Schaltelemente (24, 25) baulich zu einer Doppelkupplung zusammengefaßt sind.

8. Getriebe nach Anspruch 1, dadurch **gekennzeichnet,** daß der Variator (12) eine Übersetzungsspreizung von größer oder gleich vier aufweist.

## Claims

1. A continuously variable transmission
- with a drive shaft and an output shaft (1, 9):
- with a first and a second intermediate shaft (10, 11), which support a first (20, 21) and a second gear (26, 27) in each case;
- with first switching elements (18, 19) for producing a drive connection from the drive shaft to one of the first gears (20 or 21);
- with second switching elements (24, 25) for producing a drive connection from one of the second gears (26 or 27) to the output shaft;
- with a variator (12), which connects the two intermediate shafts with one another in such a manner that the transmission input power is transmitted to the output shaft (9) via a transmission branch (5, 7, 9) with a constant transmission ratio and a transmission branch with a continuously variable transmission ratio;
- with a planetary gearing, whose web (2) is connected to the drive shaft (1) and whose small central gear (5) is connected to the output shaft and whose large central gear (6) in a first transmission ratio range via one of the first switching elements (18) produces the drive connection from the first gear (20) to the first intermediate shaft (10) and in a second transmission ratio range via the other first switching element (19) produces the drive connection from the first gear (21) to the second intermediate shaft (11);
- in the first transmission ratio range one of the second switching elements (25) producing the drive connection from the second gear (27) of the second intermediate shaft (11) to the output shaft and
- in the second transmission ratio range the other second switching element (24) producing the drive connection from the second gear (26) of the first intermediate shaft (10) to the output shaft,
characterised in that
- the large central gear (6) is rotationally rigidly connected to a hollow shaft (8), on which two gears (16, 17) are mounted, which mesh with the respective first gear (20, 21) and
- two gears (22, 23) are mounted on the output shaft (9), which gears mesh with the respective second gear (26, 27).

2. A transmission according to claim 1, characterised in that the gears (16, 17) mounted on the hollow shaft (8) are freely rotatable gears and the gears (20, 21) of the intermediate shafts are rotationally rigidly connected to said gears (16, 17).

3. A transmission according to claim 5, characterised in that a switching element (18, 19) is associated with each freely rotatable gear (16, 17) of the hollow shaft (8).

4. A transmission according to claim 6, characterised in that the switching elements (18, 19) are structurally combined to form a double clutch.

5. A transmission according to claim 1, characterised in that the gears (22, 23) mounted on the output shaft (9) are freely rotatable gears and the gears (26, 27) of the intermediate shafts (10, 11) are rotationally rigidly connected to the gears (22, 23).

6. A transmission according to claim 1, characterised in that a switching element (24, 25) is associated with each free gear (26, 27) of the output shaft.

7. A transmission according to claim I, characterised in that the switching elements (24, 25) are structurally combined to form a double clutch.

8. A transmission according to claim 1, characterised in that the variator (12) has a transmission ratio range greater than or equal to four.

## Revendications

1. Boîte de vitesses variables en continu
- ayant un arbre d'entraînement et un arbre entraîné (1, 9);
- ayant un premier et un deuxième arbre intermédiaire (10, 11), qui portent respectivement une première et une deuxième roue dentée (26, 27);
- ayant un premier élément de commande (18, 19) pour réaliser un couplage d'entraînement entre l'arbre d'entraînement et une des premières roues dentées (20 ou 21);
- avec un deuxième élément de commande (24, 25) pour réaliser un couplage d'entraînement entre une des deuxièmes roues dentées (26 ou 27) et l'arbre entraîné;
- avec un variateur (12) qui couple entre eux les deux arbres intermédiaires de telle manière que le couple d'entrée est transmis par l'intermédiaire d'une dérivation de la boîte (5, 7, 9) avec une démultiplication constante et par l'intermédiaire d'une dérivation de boîte avec une démultiplication variable en continu sur l'arbre entraîné (9);
- avec un entraînement planétaire dont la traverse (2) est couplée à l'arbre d'entraînement (1) et dont la petite roue dentée (5) est liée à l'arbre entraîné, et dont la grande roue dentée (6) réalise le couplage d'entraînement dans une première zone de démultiplication par l'intermédiaire d'un premier élément de commande (18) avec la première roue dentée (20) du premier arbre intermédiaire (10) et réalise dans une deuxième zone de démultiplication, par l'intermédiaire de l'autre premier élément de commande (19), le couplage d'entraînement avec la deuxième roue dentée (21) du deuxième arbre intermédiaire (11);
- dans laquelle, un des deuxièmes éléments de commande (25) réalise dans ladite première zone de démultiplication, le couplage d'entraînement entre la deuxième roue dentée (27) du deuxième arbre d'entraînement (11) avec l'arbre entraîné, et
- dans laquelle l'autre deuxième élément de commande (24) réalise le couplage d'entraînement entre la deuxième roue dentée (26) du premier arbre intermédiaire (10) avec l'arbre entraîné,
**caractérisée en ce que**
- la grande roue dentée (6) est couplée en rotation avec un arbre creux (8) qui porte deux roues dentées (16, 17) qui engrènent respectivement les premières roues dentées (20, 21), et
- deux roues dentées (22, 23) sont montées sur l'arbre d'entraînement (9) qui engrènent respectivement lesdites deuxièmes roues dentées (26, 27).

2. Boîte de vitesses selon la revendication 1, **caractérisée en ce que** les roues dentées (16, 17) portées par l'arbre creux (8) sont des roues libres, et en ce que les roues dentées (20, 21) des arbres intermédiaires sont rigidement couplées à ces dernières.

3. Boîte de vitesses selon la revendication 2, **caractérisée en ce que** chaque roue libre (16, 17) de l'arbre creux (8) est associée à un élément de commande (18, 19).

4. Boîte de vitesses selon la revendication 6, **caractérisée en ce que** les éléments de commande (18, 19) sont assemblés pour réaliser un embrayage double.

5. Boîte de vitesses selon la revendication 1, **caractérisée en ce que** les roues dentées (22, 23) montées sur l'arbre entraîné (9) sont des roues libres, et en ce que les roues dentées (26, 27) des arbres intermédiaires (10,11) sont rigidement couplées à ces dernières.

6. Boîte de vitesses selon la revendication 1, **caractérisée en ce que** chaque roue libre (26, 27) de l'arbre entraîné est associée à un élément de commande (24, 25).

7. Boîte de vitesses selon la revendication 1, **caractérisée en ce que** les éléments de commande (24, 25) sont assemblés pour constituer un embrayage double.

8. Boîte de vitesses selon la revendication 1, **caractérisée en ce que** le variateur (12) a un facteur de démultiplication supérieur ou égal à quatre.
